# EUROPEAN PATENT SPECIFICATION

(11) **EP 2 819 894 B1**
(45) Date of publication and mention of the grant of the patent: **06.06.2018**
(21) Application number: 12870159.6
(22) Date of filing: 27.02.2012
(51) Int. Cl.: B60R 16/037, G06F 17/00, B60W 50/08

(54) **METHOD AND SYSTEM FOR VEHICLE PERSONALIZATION**
VERFAHREN UND SYSTEM ZUR PERSONALISIERUNG EINES FAHRZEUGS
PROCÉDÉ ET SYSTÈME PERMETTANT LA PERSONNALISATION DE VÉHICULES

(43) Date of publication of application: 07.01.2015
(73) Proprietor: Ent. Services Development Corporation LP, Houston, TX 77070 (US)
(72) Inventor: TOOHY, Clark W., Pontiac, Michigan 48341 (US); PATEL, Rikin, Sterling Heights, Michigan 48314 (US)
(74) Representative: Liesegang, Eva
(86) International application number: PCT/US2012/026733
(87) International publication number: WO 2013/130036

(56) References cited:
- US-A- 6 075 454
- US-A1- 2007 255 464
- US-A1- 2010 222 939
- US-A1- 2010 222 939
- US-B1- 7 076 504
- US-B2- 6 775 603
- US-B2- 6 775 603

## Description

### BACKGROUND

The emergence and popularity of mobile computing has made various types of portable electronic devices a staple in today's marketplace. Mobile networking has afforded such portable electronic devices the ability to communicate with a host of external devices. Meanwhile, modern automobiles are now equipped with on-board computing systems and allow for enhanced technological capabilities. For example, some vehicles include global positioning and navigations systems, Bluetooth™ interfaces for voice-activated calling, and touch-enabled displays for interacting with the operating user or driver. And though users typically operate a number of various vehicles over time, many operate each vehicle in the same manner and with the same desired preferences and/or configurations.

Today, some manufacturers and companies have transitioned to some degree of personalization for specific vehicle options. For example, OnStar® provides personalized information to the user related to the current engine diagnostics, tire pressure, and maintenance needs of a particular vehicle. Other solutions allow for vehicle personalization (e.g., custom wheels, transmission options) at the dealership and under the guidance of an experienced sales person. Still other solutions are directed to fleet managers monitoring vehicles in the field for diagnosing the configuration status of a specific vehicle. For example, Patent Publication No. 2009/0079555 discloses a method for remotely reading vehicle setting parameters and configurations so as to control aspects (e.g., speed) of an on-board GPS device while providing alerts based on location-based information of the vehicle. However, there is still a need in the art for allowing a user to consolidate all vehicle data and personalization preferences into one centralized location for enabling automated configuration of a user vehicle.

US 6,775,603 B2 discloses a system and method for selectively setting variable vehicle operating parameters by storing information representative of driver preferences on a portable information storage device, and later recall the preferences to automatically adjust the system to said settings. Examples of settings are seat position, mirrors, radio presets, climate control settings, websites, bookmarks, and mobile telephone presets.

US 2010/0222939 A1 describes a method for managing a vehicle utilizing an identification token. A remote console may communicate user profile data, settings, security data, feedback data, diagnostic data, wherein the remote console may communicate directly with the vehicle to execute vehicle settings associated with a user profile.

The present invention provides a computer-implemented method according to claim 1 and a system according to claim 8. Examples of the invention are defined in the dependent claims.

### BRIEF DESCRIPTION OF THE DRAWINGS

The features and advantages of the inventions as well as additional features and advantages thereof will be more clearly understood hereinafter as a result of a detailed description of particular embodiments of the invention when taken in conjunction with the following drawings in which:
FIG. 1 is a simplified block diagram of the vehicle personalization system according to an example of the present invention.
FIG. 2 is a concept illustration of data exchange between a plurality of portable electronic devices and an automobile via the vehicle personalization system in accordance with an example of the present invention.
FIG. 3 is a simplified flow chart of the processing steps for vehicle personalization in accordance with an example of the present invention.

### DETAILED DESCRIPTION OF THE INVENTION

The following discussion is directed to various embodiments. Although one or more of these embodiments may be discussed in detail, the embodiments disclosed should not be interpreted, or otherwise used, as limiting the scope of the disclosure, including the claims. In addition, one skilled in the art
will understand that the following description has broad application, and the discussion of any embodiment is meant only to be an example of that embodiment, and not intended to intimate that the scope of the disclosure, including the claims, is limited to that embodiment. Furthermore, as used herein, the designators "A", "B" and "N" particularly with respect to the reference numerals in the drawings, indicate that a number of the particular feature so designated can be included with examples of the present disclosure. The designators can represent the same or different numbers of the particular features.

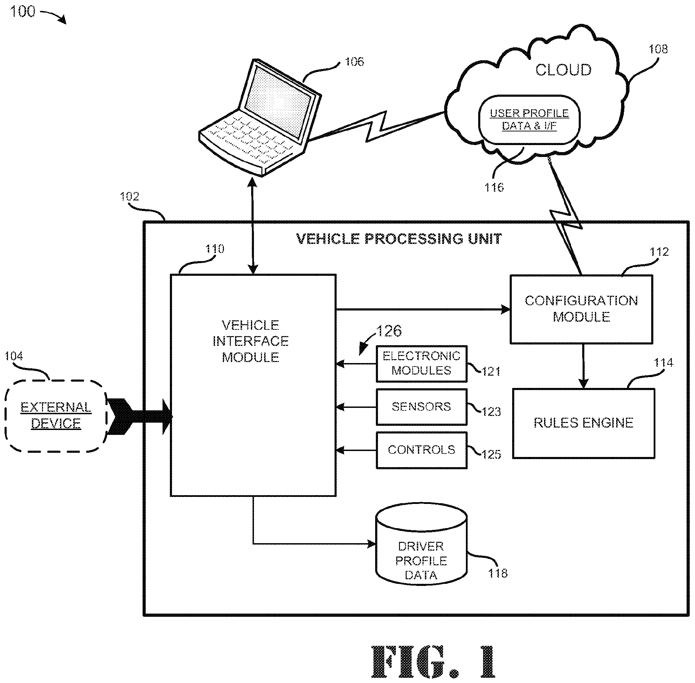

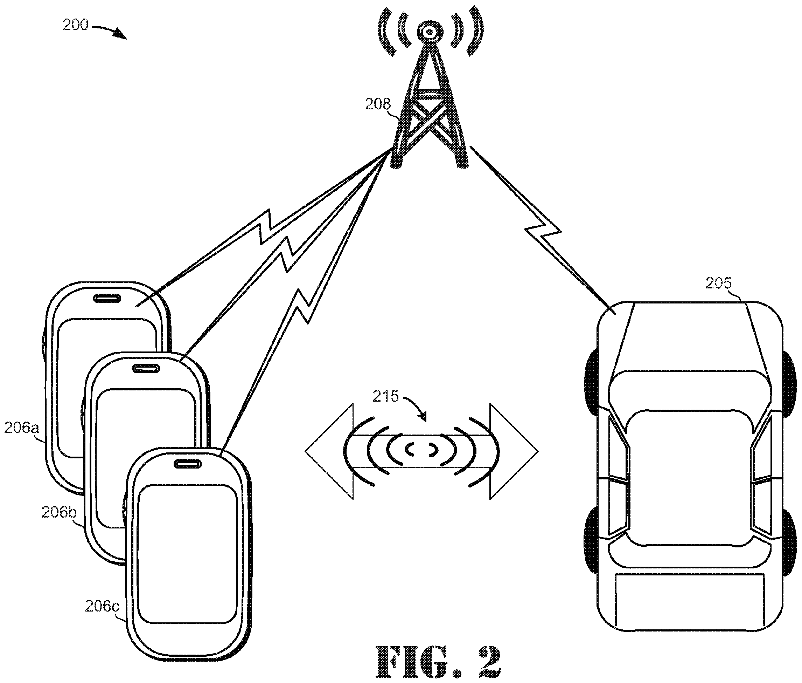

The figures herein follow a numbering convention in which the first digit or digits correspond to the drawing figure number and the remaining digits identify an element or component in the drawing. Similar elements or components between different figures may be identified by the user of similar digits. For example, 143 may reference element "43" in Figure 1, and a similar element may be referenced as 243 in Figure 2. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense.

Embodiments of the present invention disclose a system and method for vehicle personalization. According to one embodiment, communication between an electronic device and the vehicle enables specification and implementation of software-based vehicle configuration. The software-based specification for vehicle configuration may be accomplished using rules and constraints, resulting in personalized vehicle settings for a particular user. Additionally, examples described herein aim to provide a remote user interface with access to one or more vehicles in one location and for multiple users each having a preferred/personalized vehicle configuration settings. Moreover, the configuration and portability of vehicle personalization may be accomplished through loading of user preferred settings stored on an external storage device.

Referring now in more detail to the drawings in which like numerals identify corresponding parts throughout the views, FIG. 1 is a simplified block diagram of the vehicle personalization system according to an example of the present invention. As shown here, the system 100 includes a computing device 106, a network-based server 108, and a vehicle processing unit 102. The vehicle processing unit 102 represents a central processing unit (CPU), microcontroller, microprocessor, or logic configured to execute programming instructions associated with the system 100. The computing device 106 represents a portable electronic or web-based interface configured to communicate with the vehicle through a vehicle interface module 120 so as to attain available and relevant configuration settings. For example, relevant configuration and settings of a particular vehicle may include data relating to in-car entertainment and/or communication, vehicle powertrain settings, and/or vehicle running equipment. According to example embodiment, the relevant configuration settings are attained through readings of devices associated with vehicle such as electronic modules 121, vehicle sensors 123, and vehicle controls 125 for example (e.g., seat settings, radio settings, music player, engine, chassis, transmission, etc.). In one example, the connectors 126 interfacing with the specific vehicle components and sensors (i.e., 121, 123, 125) are capable of assigning a configurable value (e.g., yes/no) to the collected configuration data. Alternatively, manufacturers may define a set of configuration parameters, type, valid values, and the like, for personal customization by the user or driver. Still further, the configuration settings may be retrieved via the internetwork through entry of the vehicle identification number, which may be used to provide an entire list of vehicle equipment and customizable features including the vehicle's base configuration parameters.

Network-based storage device 108 represents a cloud or similar networked online storage device and service for storing preference information associated with a user. More particularly, the cloud network 108 provides a web-based user profile interface 116 for allowing a user to manage and store their profile information (e.g., vehicle identification number of vehicles owned, vehicle preference data, etc.). As the web-based interface parameters 116 are stored in the cloud in accordance with one example embodiment, the profile and preference data is virtual to the user and accessible anywhere. Additionally, the user may also adjust their user profile and preference information in real-time through use of a local and dedicated application running on the computing device 106. The configuration device 112 is enabled to communicate with the cloud storage network 108 for retrieving user profile data stored therein, and also with the vehicle interface module 110 to retrieve the available configurable settings for vehicle personalization. Rules engine 114 represents a set of configuration parameters and/or thresholds for establishing the compatibility of various configurations. For example, rules engine may establish - for safety precaution - that the driver-side mirror may not be adjusted to the preferred angle setting based on the size and weight of the driver, or based on the preferred seat position.

Once the settings are configured, the vehicle processing unit 102 may save the user preference information for each operator of the vehicle locally as driver profile data 116. The profile data 116 may then be managed directly on the vehicle via a display or interface module 110. Such a configuration allows for personalization of the same vehicle for multiple operators as will be described with reference to FIG. 2. Moreover, in the event that the target vehicle is not configured with network access, the system 100 and configurable vehicle settings may be personalized by the vehicle operator through settings transfer from an external device 104 such as a Universal Serial Bus (USB) adapter, smart Card, electronic key fob (RFID), or via auxiliary input for example.

FIG. 2 is a concept illustration of data exchange between a plurality of portable electronic devices and an automobile via the vehicle personalization system in accordance with an example of the present invention. As shown here, the system 200 includes multiple computing devices 206a - 206c used to personalize configurable settings of a vehicle 205. As described in the previous example embodiment, the computing devices 206a - 206c are utilized by an operating user and communicate with network 208 for configuring user profile and preference information. The profile information may include the user's physical characteristics such as height and weight for establishing a driving comfort range, in addition to preferences and/or driving parameters (e.g., highway/city driving, engine tuning, transmission shifting, chassis setup, etc.). Examples of configurations and/or settings that may be personalized and transferred between multiple vehicles include: pre-configured radio stations (e.g., AM, FM, Sirius/XM), metric system for dashboard, Bluetooth® pairing information, personal phone directory and address contact list from a cell phone and/or email account, settings relating to downloadable music, mirror/seat positioning, software configurable vehicle suspensions, and the like. Moreover, operating users may transfer their personal configuration directly from the computing device 206a - 206c such as a smartphone for example, to the vehicle 205 via Bluetooth® or similar communication interface/protocol 215. Specifically, each computing device 206a - 206c may include distinct user profile information that causes the vehicle computing device to adjust configurable settings of the vehicle 205 based upon receiving a configuration change request from a particular device (via a short-range communication interface), or through proximity detection of each computing device (e.g, configuration adjustment only for the driver's computing device when multiple passengers/devices present).

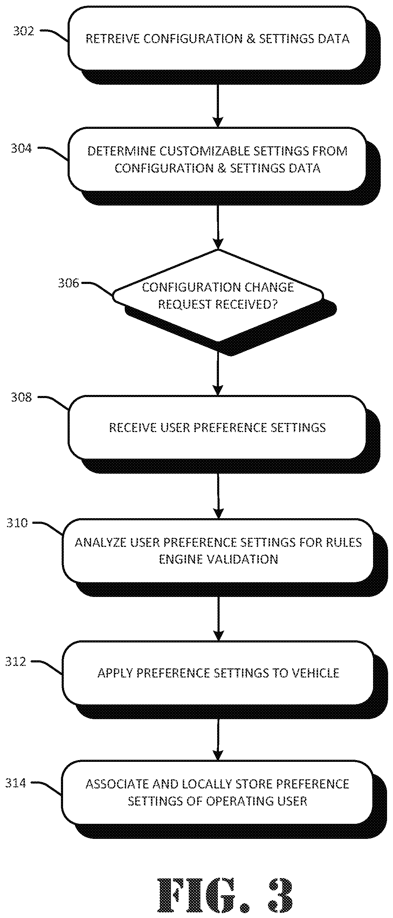

FIG. 3 is a simplified flow chart of the processing steps for vehicle personalization the in accordance with an example of the present invention. In step 304, configuration and setting ("C&S") data of the vehicle are retrieved. According to one example embodiment, retrieval of vehicle C&S information may be accomplished at the manufacturing level, through online lookup of the vehicle's VIN number, or via a computing device and vehicle interface module. Next, in step 304, the system determines the customizable features of the configuration and settings data. That is, given the present list of configurations and settings associated with the vehicle, a determination is made as to which configurations and settings are capable of being personalized by the operating user. The determination may be accomplished through manufacturer's listing of preset configurable parameters; analysis of data parameters encoded with the configuration or setting of a particular device/sensor or connector; or via an online database of vehicle identification information tagged by VIN or the make and year of the vehicle. Upon receiving a configuration change request in step 306 (via proximity detection or manually), preference settings associated with the requesting user are then downloaded and received at the vehicle interface module of the target vehicle in step 308. As discussed above, the user profile and vehicle preference settings may be obtained via the cloud network, directly from the user computing device, or via an external storage device. Next, in step 310 the preferred settings of the user are analyzed by the rules engine for validating compatibility of the user preferred settings with other configurations and/or settings of the vehicle. In step 312, the user profile and preference settings are then applied to configuration module so as to adjust the current configuration and/or settings of the vehicle (e.g., adjust current seat settings to accommodate physical characteristics of user). Lastly, in step 314, the user profile and settings may then be stored locally on the vehicle processing unit for subsequent retrieval. For example, the preference settings of the current driver may be associated with the Bluetooth pairing information of the user's portable electronic device such that when the user enters the car in the future, the vehicle processing unit is able to automatically pair with this device and then apply all of the user's stored preference settings.

Embodiments of the present invention provide system and method for vehicle personalization. Many safety and other advantages are afforded by the vehicle personalization system disclosed herein. For example, the automated aspect of the present examples helps to greatly reduce the time required to setup a vehicle with driver preferences. And since the driver is not preoccupied physically configuring the vehicle during transit, the driver's ability to focus on the road and other drivers is greatly improved. Still further, the present system also allows drivers to take preferred configurations and settings from vehicle to vehicle with minimal setup time via the cloud-based user profile.

Furthermore, while the invention has been described with respect to exemplary embodiments, one skilled in the art will recognize that numerous modifications are possible. For example, although exemplary embodiments depict a smartphone as the computing device, the invention is not limited thereto. For example, the disclosed computing device may be a netbook, a tablet personal computer, or any other electronic device capable of communication with the vehicle interface module. Thus, although the invention has been described with respect to exemplary embodiments, it will be appreciated that the invention is intended to cover all modifications and equivalents within the scope of the following claims.

## Claims

1. A computer-implemented method for vehicle personalization, the method comprising:
determining, via a vehicle processing unit (102), at least one customizable setting from a plurality of configuration settings associated with the vehicle;
receiving, at the vehicle processing unit (102), a request for personalization of at least one configuration setting;
retrieving, via the vehicle processing unit (102), user profile information, wherein the user profile information includes a plurality of preference settings associated with a vehicle; and
adjusting at least one customizable setting of the vehicle based on the preference settings of the user profile information;
wherein the step of adjusting the at least one customizable setting further comprises:
determining the compatibility of the user preference setting against the plurality of configuration settings associated with the vehicle.

2. The method of claim 1, wherein the user profile information is retrieved via a network-based server.

3. The method of claim 1, wherein the user preference settings are received via an external data storage device.

4. The method of claim 1, wherein the vehicle processing unit is configured to store user profile information associated with a plurality of operating users.

5. The method of claim 4, further comprising:
locally storing user preference data associated with a plurality of operating users; and
automatically adjusting the at least one customizable setting of the vehicle based on proximity detection of the operating user and the stored user data associated with the detected operating user.

6. The method of claim 5, wherein the user profile information includes driving parameters, physical characteristics, entertainment preferences, and/or communication preferences of the operating user.

7. The method of claim 5, wherein the configuration settings of the vehicle include a radio station, phone contact list, music phone directory, vehicle powertrain settings, and/or vehicle running equipment settings.

8. A system for personalization of a vehicle (205) comprising:
a network-based server (108) configured to store user profile information associated with a driver, wherein the profile information includes a plurality of vehicle preference settings;
a vehicle processing unit (102) in communication with the network-based server (108) and configured to adjust at least one customizable setting of a plurality of vehicle configuration settings;
wherein upon receiving a request for vehicle setting personalization, the vehicle processing unit (102) retrieves the stored user profile information associated with the driver and adjusts at least one customizable setting of the vehicle (205) based on preference settings of the user profile;
wherein the vehicle processing unit (102) further comprises:
a rules analyzing module configured to determine the compatibility of the user preference settings against the plurality of configuration settings associated with the vehicle (205).

9. The system of claim 8, wherein the vehicle processing unit (102) is configured to store user profile information associated with a plurality of operating users, and
wherein at least one customizable setting of the vehicle (205) is adjusted based on proximity detection of the operating user and the stored user profile information associated with the detected operating user.

10. The system of claim 8, wherein the user profile include driving parameters, physical characteristics, entertainment preferences, and/or communication preferences of the operating user.

11. The system of claim 8, wherein the configuration settings of the vehicle (205) include a radio station, phone contact list, music phone directory, vehicle power train, and/or vehicle running equipment.

12. A non-transitory computer readable storage medium having stored executable instructions, that when executed by a processor unit associated with a vehicle system, causes the system to perform the method of one of claims 1 to 7.

## Patentansprüche

1. Computer-implementiertes Verfahren zur Fahrzeug-Personalisierung, das Verfahren umfassend:
Bestimmen wenigstens einer anpassbaren Einstellung aus einer Vielzahl von Konfigurations-Einstellungen, die dem Fahrzeug zugeordnet sind, über eine Fahrzeugverarbeitungseinheit (102);
Empfangen einer Anforderung zur Personalisierung wenigstens einer Konfigurations-Einstellung an der Fahrzeugverarbeitungseinheit (102);
Abrufen von Nutzerprofilinformation über die Fahrzeugverarbeitungseinheit (102), wobei die Nutzerprofilinformation eine Vielzahl von Präferenz-Einstellungen, die dem Fahrzeug zugeordnet sind, umfasst; und
Einstellen wenigstens einer anpassbaren Einstellung des Fahrzeugs auf der Basis der Präferenz-Einstellungen der Nutzerprofilinformation;
wobei der Schritt des Einstellens der wenigstens einen anpassbaren Einstellung ferner umfasst:
Ermitteln der Kompatibilität der Präferenz-Einstellungen zu der Vielzahl von Konfigurations-Einstellungen, die dem Fahrzeug zugeordnet sind.

2. Verfahren nach Anspruch 1, wobei die Nutzerprofilinformation über einen netzwerk-basierten Server erfolgt.

3. Verfahren nach Anspruch 1, wobei die Nutzerpräferenz-Einstellung über ein externes Datenspeichergerät erfolgt.

4. Verfahren nach Anspruch 1, wobei die Fahrzeugverarbeitungseinheit dazu konfiguriert ist, Nutzerprofilinformation zu speichern, die einer Vielzahl von Nutzern zugeordnet ist.

5. Verfahren nach Anspruch 4, ferner umfassend:
lokales Speichern von Präferenz-Daten, die der Vielzahl von Nutzern zugeordnet sind, und
automatisches Einstellen der wenigstens einen anpassbaren Einstellung des Fahrzeugs auf der Basis einer Näherungs-Erfassung des Nutzers und der gespeicherten Nutzerdaten, die dem erfassten Nutzer zugeordnet sind.

6. Verfahren nach Anspruch 5, wobei die Nutzerprofilinformation Fahrparameter, physische Eigenschaften, Unterhaltungs-Präferenzen und/oder Kommunikations-Präferenzen des Nutzers umfasst.

7. Verfahren nach Anspruch 5, wobei die Konfigurationseinstellung des Fahrzeugs eine Radiostation, eine Telefonkontaktliste, ein Musikverzeichnis, eine Fahrzeug-Antriebsstrangeinstellung und/oder eine Einstellung von Fahrzeugfahreinrichtungen umfasst.

8. System zum Personalisieren eines Fahrzeugs (205) umfassend:
einen netzwerk-basierten Server (108), der dazu konfiguriert ist, Nutzerprofilinformation zu speichern, die einem Fahrer zugeordnet ist, wobei die Profilinformation eine Vielzahl von Fahrzeug-Präferenz-Einstellungen umfasst;
eine Fahrzeugverarbeitungseinheit (102) in Kommunikation mit dem netzwerk-basierten Server (108), die dazu konfiguriert ist, wenigstens eine anpassbare Einstellung einer Vielzahl von Fahrzeug-Konfigurationseinstellungen einzustellen;
wobei bei Empfang einer Anforderung nach einer Fahrzeugseinstellungs-Personalisierung, die Fahrzeugverarbeitungscinheit (102) die gespeicherte Nutzerprofilinformation, die dem Fahrer zugeordnet ist, abruft und wenigstens eine anpassbare Einstellung des Fahrzeugs (205) auf der Basis der Präferenz-Einstellung des Nutzerprofils einstellt;
wobei die Fahrzeugverarbeitungseinheit (102) ferner umfasst:
ein Regel-Analysemodul, das dazu konfiguriert ist, die Kompatibilität der NutzerPräferenz-Einstellungen mit der Vielzahl von Konfigurations-Einstellungen, die dem Fahrzeug (205) zugeordnet sind, zu bestimmen.

9. System nach Anspruch 8, wobei die Fahrzeugverarbeitungseinheit (102) dazu konfiguriert ist, Nutzerprofilinformation zu speichern, die einer Vielzahl von Nutzern zugeordnet ist, und
wobei wenigstens eine anpassbare Einstellung des Fahrzeugs (205) auf der Basis einer Näherungs-Erfassung des Nutzers und der gespeicherten Nutzerprofilinformation, die dem erfassten Nutzer zugeordnet ist, eingestellt wird.

10. System nach Anspruch 8, wobei das Nutzerprofilfahrparameter, physische Eigenschaften, Unterhaltungs-Präferenzen und/oder Kommunikations-Präferenzen des Nutzers umfasst.

11. System nach Anspruch 8, wobei die Konfigurationseinstellung des Fahrzeugs (205) eine Radiostation, eine Telefonkontaktliste, ein Musikverzeichnis, einen Fahrzeug-Antriebsstrang und/oder eine Fahrzeug-Fahreinrichtung umfasst.

12. Nicht-flüchliges, computer-lesbares Speichermedium, in dem ausführbare Befehle gespeichert sind, die dann, wenn sie von einer Prozessoreinheit ausgeführt werden, die einem Fahrzeugsystem zugeordnet ist, bewirken, dass das System das Verfahren nach einem der Ansprüche 1 bis 7 ausführt.

## Revendications

1. Procédé, mis en oeuvre par ordinateur, de personnalisation de véhicule, le procédé comportant les étapes ci-dessous consistant à :
déterminer, par l'intermédiaire d'une unité de traitement de véhicule (102), au moins un paramétrage personnalisable parmi une pluralité de paramétrages de configuration associés au véhicule ;
recevoir, au niveau de l'unité de traitement de véhicule (102), une demande de personnalisation d'au moins un paramétrage de configuration ;
récupérer, par l'intermédiaire de l'unité de traitement de véhicule (102), des informations de profils d'utilisateurs, dans lequel les informations de profils d'utilisateurs incluent une pluralité de paramétrages de préférence associés à un véhicule ; et
régler au moins un paramétrage personnalisable du véhicule sur la base des paramétrages de préférence des informations de profils d'utilisateurs ;
dans lequel l'étape de réglage dudit au moins un paramétrage personnalisable comporte en outre l'étape ci-dessous consistant à :
déterminer la compatibilité du paramétrage de préférences d'utilisateurs par rapport à la pluralité de paramétrages de configuration associés au véhicule.

2. Procédé selon la revendication 1, dans lequel les informations de profils d'utilisateurs sont récupérées par l'intermédiaire d'un serveur basé sur le réseau.

3. Procédé selon la revendication 1, dans lequel les paramétrages de préférences d'utilisateurs sont reçus par l'intermédiaire d'un dispositif de stockage de données externe.

4. Procédé selon la revendication 1, dans lequel l'unité de traitement de véhicule est configurée de manière à stocker des informations de profils d'utilisateurs associées à une pluralité d'utilisateurs opérationnels.

5. Procédé selon la revendication 4, comportant en outre les étapes ci-dessous consistant à stocker localement des données de préférences d'utilisateurs associées à une pluralité d'utilisateurs opérationnels ; et
régler automatiquement ledit au moins un paramétrage personnalisable du véhicule sur la base d'une détection de proximité de l'utilisateur opérationnel et des données d'utilisateur stockées associées à l'utilisateur opérationnel détecté.

6. Procédé selon la revendication 5, dans lequel les informations de profils d'utilisateurs incluent des paramètres de conduite, des caractéristiques physiques, des préférences de divertissement et/ou des préférences de communication de l'utilisateur opérationnel.

7. Procédé selon la revendication 5, dans lequel les paramétrages de configuration du véhicule incluent une station radio, une liste de contacts téléphoniques, un répertoire téléphonique de musique, des paramétrages de groupe motopropulseur du véhicule, et/ou des paramétrages d'équipements de fonctionnement du véhicule.

8. Système de personnalisation d'un véhicule (205) comportant :
un serveur basé sur le réseau (108) configuré de manière à stocker des informations de profils d'utilisateurs associées à un conducteur, dans lequel les informations de profils incluent une pluralité de paramétrages de préférence de véhicule ;
une unité de traitement de véhicule (102) en communication avec le serveur basé sur le réseau (108) et configurée de manière à régler au moins un paramétrage personnalisable d'une pluralité de paramétrages de configuration du véhicule ;
dans lequel, suite à la réception d'une demande de personnalisation de paramétrages de véhicule, l'unité de traitement de véhicule (102) récupère les informations de profils d'utilisateurs stockées associées au conducteur, et règle au moins un paramétrage personnalisable du véhicule (205) sur la base de paramétrages de préférence du profil d'utilisateur ;
dans lequel l'unité de traitement de véhicule (102) comporte en outre :
un module d'analyse de règles configuré de manière à déterminer la compatibilité des paramétrages de préférences d'utilisateurs par rapport à la pluralité de paramétrages de configuration associés au véhicule (205).

9. Système selon la revendication 8, dans lequel l'unité de traitement de véhicule (102) est configurée de manière à stocker des informations de profils d'utilisateurs associées à une pluralité d'utilisateurs opérationnels ; et
dans lequel au moins un paramétrage personnalisable du véhicule (205) est réglé sur la base d'une détection de proximité de l'utilisateur opérationnel et des informations de profils d'utilisateurs stockées associées à l'utilisateur opérationnel détecté.

10. Système selon la revendication 8, dans lequel le profil d'utilisateur inclut des paramètres de conduite, des caractéristiques physiques, des préférences de divertissement et/ou des préférences de communication de l'utilisateur opérationnel.

11. Système selon la revendication 8, dans lequel les paramétrages de configuration du véhicule (205) incluent une station radio, une liste de contacts téléphoniques, un répertoire téléphonique de musique, un groupe motopropulseur du véhicule, et/ou des équipements de fonctionnement du véhicule.

12. Support de stockage lisible par ordinateur non transitoire dans lequel sont stockées des instructions exécutables, qui, lorsqu'elles sont exécutées par une unité de processeur associée à un système de véhicule, amènent le système à mettre en oeuvre le procédé selon l'une quelconque des revendications 1 à 7.
